# EUROPÄISCHE PATENTSCHRIFT

(11) **EP 1 502 726 B1**
(45) Veröffentlichungstag und Bekanntmachung des Hinweises auf die Patenterteilung: **28.01.2009**
(21) Anmeldenummer: 04016628.2
(22) Anmeldetag: 15.07.2004
(51) Int. Cl.: B29C 70/00

(54) **Werkstoff für Formteile**
Materials for moldings
Matériaux pour moulages

(30) Priorität: 29.07.2003 DE 10334875
(43) Veröffentlichungstag der Anmeldung: 02.02.2005
(73) Patentinhaber: Behr GmbH & Co. KG, 70469 Stuttgart (DE)
(72) Erfinder: Wolf, Walter, 71570 Oppenweiler-Zell (DE)

(56) Entgegenhaltungen:
- WO-A-01/32385
- WO-A-91/01621
- WO-A-96/17723
- WO-A-97/37827
- DE-A- 2 946 540
- DE-A- 19 716 298
- GB-A- 2 259 667
- US-A- 5 245 770

## Beschreibung

Die Erfindung bezieht sich auf einen Werkstoff für Formteile, auf ein derartiges Formteil an sich, auf ein Verfahren zur Herstellung eines derartigen Formteils und auf eine Verwendung eines derartigen Formteils.

Für einen Werkstoff wird als Basisstoff häufig ein Kunststoff, insbesondere ein Thermoplast, Duroplast oder Elastomer eingesetzt. Zu den wichtigsten Eigenschaften dieser genannten Kunststoff-Werkstoffe zählen verschiedene Verarbeitungsmöglichkeiten, wie z. B. Spritzgießen und Extrudieren. Dadurch ist eine vielfältige Formgebung ermöglicht, so dass diese Kunststoffe als zudem kostengünstige Alternative zu metallischen Werkstoffen für den Einsatz in vielen industriellen Gebieten geeignet sind.

Beim Spritzgießen wird ein Pulver oder Granulat aus Kunststoff in einer Spritzeinheit zu einer Formmasse aufgeschmolzen und in ein beheiztes Spritzgieß-Werkzeug eingespritzt. In diesem Werkzeug ist ein strukturierter Formeinsatz eingebaut, der komplett mit der Formmasse gefüllt wird. Nach dem Abkühlen und Öffnen des Werkzeugs werden die spritzgegossenen Teile entnommen.

Extrudieren bedeutet Strangpressen mit Schneckenpressen, den so genannten Extrudern. Die pulver- oder granulatförmige Formmasse wird durch die Schnecke aufgenommen, transportiert und durch Reibung und zusätzliche Heizung plastifiziert. Beim weiteren Transport durch die Schnecke erhöht sich der Druck, und die formbare Masse wird durch eine nachgeschaltete Düse in Form eines Stranges ausgepresst. Je nach Düsenform werden spezielle Formteile wie beispielsweise Profile, Bänder, Bahnen, Rohre, Schläuche, Fäden, Stäbe, Platten u. a. erzeugt, so dass die Produktpalette besonders reichhaltig ist.

Durch Zugaben vor und/oder während eines solchen Formgebungsprozesses können den Werkstoffen spezifisch gewünschte Eigenschaften gegeben werden. So dient üblicherweise ein dem Basiskunststoff zugesetzter Füllstoff wie beispielsweise Glas, Holzmehl, Talkum etc. zur Erhöhung der Festigkeit, der Steifigkeit oder der Wärmestandfestigkeit der daraus gefertigten Formteile.

Im Zuge höher werdender Umweltauflagen hinsichtlich des Umgangs mit Energieressourcen in quasi allen Bereichen des täglichen Lebens sind Werkstoffe und daraus gefertigte Formteile, die Energie speichern und diese bei Bedarf beispielsweise wieder in Form von Wärme freigeben, von zunehmender Bedeutung. Besonders in der in der Automobil-, Luft- und Raumfahrtindustrie, aber auch in den Sparten Medizin, Hausgeräte-Technik, Hochbau und Elektrotechnik kommt ferner aus energetischen Gründen der Leichtbauweise eine zentrale Bedeutung zu. Dabei sollen allerdings die anderen Ursprungseigenschaften wie beispielsweise die Wärmestandfestigkeit und die Dimensionsstabilität erhalten bleiben. Dazu werden bei Leichtbaustrukturen üblicherweise Partikel, z. B. Schaumpartikel in eine Metallstruktur eingefüllt und die Hohlräume zwischen den Partikel anschließend mit einem Bindemittel gefüllt. Bei dem eigentlichen Formgebungsprozess kommt es dann zu einer Polymerisierung des Bindemittels, wodurch die Partikel verbunden werden. Nachteilig dabei ist, dass die insbesondere porösen Partikel leichter als das Bindemittel sind und somit aufschwimmen. Dadurch kann es zu Lufteinschlüssen kommen, welche wiederum eine so genannte Lunkergefahr verursachen. Weiterhin ist eine entsprechend lange Füllzeit erforderlich und die Füllung muss in einer vorgegebenen bestimmten Lage ausgeführt werden.

Ferner ist aus der DE 29 46 540 A1 ein Verfahren zum zumindest teilweise Ausbeziehungsweise Hinterfüllen eines Bauteiles unter Verwendung eines aufschäumenden Kunstharzes auf Polyurethanbasis bekannt. Hierzu werden Leichtzuschlagstoffe verwendet, deren einzelne Partikel mit einer Schicht aus einem noch flüssigen feuchtigkeitshärtenden Einkomponenten-Polyurethanharz überzogen sind.

Der Erfindung liegt daher die Aufgabe zugrunde, einen Werkstoff der oben genannten Art bereit zu stellen, der die Herstellung von Formteilen mit thermischen Energiespeichereigenschaften und vergleichsweise geringen Dichten und Massen bei gleichzeitiger Formstabilität ermöglicht. Des Weiteren sollen ein derartiges Formteil an sich zur Verfügung gestellt und ein besonders geeignetes Verfahren zur Herstellung eines derartigen Formteils sowie eine Verwendung eines derartigen Formteils angegeben werden.

Bezüglich des Werkstoffes für Formteile wird diese Aufgabe erfindungsgemäß gelöst, indem einem als Basisstoff vorgesehenen Kunststoff Partikel, z.B. poröse Partikel, eines Füllstoffes beigemischt sind, wobei der Partikel mit einem Bindemittel umgeben ist.

Die Erfindung geht dabei von der Überlegung aus, dass ein für einen besonders energiesparenden Einsatz zu verarbeitender Werkstoff derart ausgestattet sein sollte, dass er den Anforderungen der Industrie angepasst ist. Ein aus einem Werkstoff gefertigtes Formteil mit vergleichsweise hohem Gewicht hat nämlich häufig nachteilige Auswirkungen auf die Kosten. So ist beispielsweise eine leichte Bauweise von Kraftfahrzeugteilen zugunsten eines geringen Kraftstoffverbrauchs besonders gewünscht. Diese kann unter anderem dadurch begünstigt werden, dass bereits bei der Herstellung der entsprechenden Formteile in hohem Maße auf geringe Gewichtsbeiträge geachtet wird.

So sollte das Formteil in allen seinen Bestandteilen oder Komponenten eine vergleichsweise geringe Dichte aufweisen. Dabei sollten bisherige Ursprungseigenschaften beispielsweise hinsichtlich seiner Temperaturbeständigkeit und Dimensionsstabilität sowie seines Isolations- und Dämpfungsverhaltens bezüglich Temperatur, Schall und Schwingungen nach Möglichkeit beibehalten werden. Dies sollte auch bei der Wahl eines besonders geeigneten Füllstoffes berücksichtigt werden. Dazu sind bei dem Werkstoff für Formteile dem als Basisstoff vorgesehenen Kunststoff statt eines kompakten Füllstoffes poröse Partikel eines Füllstoffs beigemischt.

Damit ein Formteil besonders korrosions- und ermüdigungsresistent und widerstandsfähiger gegen mechanische Belastungen ist, sollten die porösen Partikel gleichmäßig beim Mischen und Einfüllen im Werkstoff verteilt werden. Zusätzlich zu einer durchgängigen und gleichmäßigen Verteilung der Partikel im Werkstoff sollten die Partikel eine möglichst gute Verbindung beim Polymerisieren eingehen. Dafür sind bei dem Werkstoff für Formteile dem als Basisstoff vorgesehenen Kunststoff poröse Partikel eines Füllstoffs beigemischt, wobei der jeweilige Partikel mit einem Bindemittel umgeben ist. Mit anderen Worten: Der Partikel ist mit einem Bindemittel in der Art von pillertiertem Saatgut umgeben, wobei die Partikel als Füllstoffe in eine Schale, einen Hohlkörper oder in eine doppelwandige Struktur gefüllt und dort ggf. aktiviert werden, so dass sich die Partikel über das Bindemittel miteinander verbinden.

Um eine möglichst gute und sichere Umhüllung des Partikels mit dem Bindemittel zu erreichen, ist der Partikel mit dem Bindemittel verkapselt. Für das Bindemittel, das eine hinreichend gute Verbindung der Partikel beim Polymerisieren bewirken soll, ist ein Klebstoff, insbesondere ein thermisch aushärtender Klebstoff, z. B. Epoxidharz eingesetzt. Alternativ kann als Bindemittel ein mikroverkapselter Klebstoff verwendet werden. Bevorzugt sind hitzeaktivierende Klebstoffe als Bindemittel vorgesehen, insbesondere ein Zweikomponenten-Stoff, z. B. Epoxid-Polysulfid oder Polyurethan (kurz PUR genannt). Je nach Anwendungsgebiet und Anforderung an die zu erfüllenden Eigenschaften des Formteils kann das Bindemittel den Partikel zweckmäßigerweise schichtweise umgeben.

Je nach Art und Funktion des zu formenden Formteils kann dieses zusätzlich mit einer Deckschicht versehen sein. Für ein besonders statisch beanspruchtes Formteil weist dieses ein oder mehrere, insbesondere feste oder stabile Deckschichten auf. Dabei kann das Formteil als ein zweischaliger Hohlkörper oder als ein Vollprofil mit einem vollständig mit dem Füllstoff gefüllten Körper ausgebildet sein. Zum Einbringen des Füllstoffs mit den Partikeln und zum Einbringen des Bindemittels ist die Deckschicht zweckmäßigerweise mit Öffnungen versehen. Die Deckschicht ist dabei vorzugsweise partikelfrei. Hierdurch ist eine Deck- oder Oberflächenschicht für das Formteil gegeben, ohne dass Füllkörper oder Partikel sichtbar sind. Eine derartige partikelfreie Deckschicht dient insbesondere als Dekorschicht. Je nach Art und Ausführung des Formteils kann die Deckschicht auch nachträglich auf das bereits geformte Formteil aufgebracht werden.

Bevorzugte Ausgestaltungen des entsprechenden Werkstoffes für Formteile sind in den Unteransprüchen beschrieben.

Zur Vereinbarung sich eigentlich widersprechender Anforderungen, einer vergleichsweise geringen Dichte unter gleichzeitiger Aufrechterhaltung der Ursprungseigenschaften des als Basisstoff eingesetzten Kunststoffes, beträgt der Volumen-Anteil der porösen Partikel des Füllstoffes zwischen 10 % und 95 %, vorzugsweise zwischen 20 % und 40 %. Der Volumen-Anteil ist dabei abhängig von der Korngröße, insbesondere der durchschnittlichen Korngröße der Partikel und der Kornverteilung, wobei bevorzugt eine einheitliche Korngröße und/oder Kornverteilung oder -mischung verwendet wird. Hierdurch sind Formteile im Innenbereich eines Kraftfahrzeuges, wie beispielsweise für Gehäuse von Wärmetauschern, Kühlern, Klimaanlagen, Luftzufuhranlagen und/oder Wasserkästen, mit einer hinreichenden Formsteifigkeit und Wärmestandfestigkeit versehen.

Um eine besonders leichte Durchmischung der Partikel des Füllstoffes mit dem als Basisstoff vorgesehenen Kunststoff zu ermöglichen, sollte die Form der Partikel des Füllstoffes in besonderem Maße eine gleichmäßige Verteilung in der so genannten Kunststoffmatrix begünstigen und insbesondere eine Aggregation, Clusterbildung und/oder Sedimentation verhindern. Daher weisen die Partikel des Füllstoffes zweckmäßigerweise eine regelmäßige Polyederform oder vorzugsweise eine Kugelform auf. Denn Kugeln haben das kleinste Verhältnis zwischen Oberfläche und Volumen. Die infolge dessen gering gehaltene Wechselwirkung der kugelförmigen Partikel des Füllstoffes miteinander oder mit der Kunststoffmatrix führt dabei dazu, dass der Durchmischungseffekt erleichtert wird. Damit wird beispielsweise je nach Verfahren ein Verstopfen der Spritzdüse bzw. der Extruderschnecke vermieden. Auch werden im Endeffekt räumlich uneinheitliche Eigenschaften des Formteiles, wie zum Beispiel Festigkeitsunterschiede, unterbunden.

Zur Erhöhung der Festigkeit lässt sich richtungsabhängig zweckmäßigerweise der gezielte Einsatz von orientierungsfähigen Formen, wie vorteilhafterweise von Hohlfasern, nutzen.

Zur dichten Ausgestaltung eines zu fertigenden Formteiles durch Spritzgießoder Extrusions-Verfahren weisen die Partikel des Füllstoffes zweckmäßigerweise eine durchschnittliche Partikelgröße auf, die an eine vorgegebene Minimalwandstärke des zu fertigenden Formteiles angepasst ist. Vorteilhafterweise beträgt die durchschnittliche Partikelgröße 1/3 oder 1/2 der Wandstärke. Das Formteil, z. B. eine Hohlkugel oder ein anderer Hohlkörper oder ein Vollprofil, weist eine Größe von 0,5 mm bis 30 mm, vorzugsweise von 2 mm bis 12 mm auf.

Um die Partikel des Füllstoffs bei der Plastifizierung nicht zu zerstören, ist die durchschnittliche Größe der porösen Partikel zweckmäßigerweise an die Extruderschnecke oder die Plastifiziereinheit der Spritzgießmaschine angepasst. Dazu ist die durchschnittliche Partikelgröße der porösen Partikel des Füllstoffes in Kugelform kleiner als 1 mm, vorzugsweise zwischen 0,2 mm und 0,9 mm gewählt. Für das Versetzen des Werkstoffs für Formteile mit zusätzlichen Eigenschaften von langfaserverstärkten Werkstoffen sind die Maße der Partikel des Füllstoffes in Faserform vorteilhafterweise mit einer Länge zwischen 3 und 15 mm sowie einem Durchmesser zwischen 5 µm und 15 µm gewählt. Dies gilt insbesondere für Spritzgieß-, Spritzprägen- oder Extrusions-Verfahren.

Für den Werkstoff, der anschließend spritzgegossen oder extrudiert werden soll, ist als Kunststoff vorzugsweise ein Thermoplast, ein Duroplast oder ein Elastomer eingesetzt. Als Thermoplast kommen insbesondere Acrylnitril-Butadien-Styrol-Copolymerisat, Acrylnitril-Styrol-Acrylester-Copolymer, Cellulose-acetat, Celluloseacetobutyrat, Ethylen-Vinylacetat, Tetrafluorethylen-Hexafluorethylen-Copolymer, Polyarylamid, Polyamidimid, Polyacrylnitril, Polyarylat, Polyamid, Polybutylentherephtalat, Polycarbonat, Polyethylen, Polyetherimid, Polyetheretherketon; Polyetherketon-etherketon, Polyethersulfon, Polyethylentherephtalat, Perfluoralkoxy Copolymer, Polyaminobismeleinimid, Polymethylmethacrylat, Polyoxymethylen, Polypropylen, Polyphenylenether, Polyphenylenoxid, Polyphenylensulfid, Polystyrol, Polysulfon, Polytetrafluorethylen, Polychlortrifluorethylen, Polyvinylchlorid, Polyvinylidenchlorid, Polyvinylidenfluorid, Styrol-Acrylnitril Copolymer oder Styrol-Butadien Copolymer zum Einsatz. Als Duroplast werden insbesondere Epoxidharz, Melaminformaldehydharz, Melaminphenolharz, Phenol-Formaldehydharz, Polyurethanharz, Silikonharz, ungesättigte Polyester, Harnstoff-Formaldehydharz oder Vinylesterharz eingesetzt, während als Elastomer insbesondere Acrylatkautschuk, Polyesterurethan-Kautschuk, Butadien-Kautschuk, Chloropren-Kautschuk, Chlorsulfoniertes Polyethylen, Ethylen-Propylen-Dien Terpolymer, Ethylen-Vinylacetat Copolymer, Epoxidurethan Kautschuk, Fluorsilikonkautschuk, Fluorkautschuk, Isopren-Isobutylen Copolymer, Isoprenkautschuk, Methyl-Vinyl-Silikon Kautschuk, Acrylnitril-Butadien Kautschuk, Styrol-Butadien Kautschuk oder Polysulfid Kautschuk Verwendung finden.

Für einen besonders gering gehaltenen Herstellungsaufwand werden zweckmäßigerweise kommerziell erhältliche Produkte als Füllstoffe eingesetzt. Als bereits von Natur aus poröse Füllstoff-Partikel oder durch einen physikalischen oder chemischen Aufschäumvorgang gebildete poröse Füllstoff-Partikel sind vorzugsweise Glasschaumgranulat-Partikel, Glaskugeln mit einem Durchmesser kleiner 50 µm oder Aktivkohle-Partikel, Glasmehl, Gesteinsmehl, wie zum Beispiel Glimmer mit einem Durchmesser von ca. 3,0 µm, Perlith, Kreide, Calciumcarbonat mit einem Durchmesser von ca. 0,7 µm, Ton, Talkum, Alkalisilikat, Ammoniumsilikat und/oder ein anderes Silikat oder ein anderer Mineralstoff eingesetzt. Alternativ kann auch ein Liaver-Schaumpartikel eingesetzt werden.

Vorzugsweise bilden dabei aneinander stoßende Partikel, die über eine Oberflächenschicht miteinander verbunden sind eine Matrixstruktur. In einer bevorzugten Ausführungsform sind die Partikel stoffschlüssig und/oder formschlüssig miteinander verbunden.

Bezüglich des Formteiles wird die oben genannte Aufgabe gelöst, indem in einem als Basisstoff vorgesehenen Kunststoff mit einem Bindemittel umgebende Partikel eines Füllstoffes eingebettet sind.

Bezüglich des Verfahrens zur Herstellung eines Formteils wird die genannte Aufgabe gelöst, indem poröse Partikel eines Füllstoffes mit einem Bindemittel umgeben, insbesondere benetzt und in einen Kunststoff eingebracht werden, wobei sowie das daraus entstehende Gemisch als Werkstoff unter Temperatureinwirkung spritzgegossen, extrudiert, geschäumt oder anderweitig zu statischen Strukturen verarbeitet wird.

Füllstoff-Partikeln, die von Natur aus keine poröse Struktur aufweisen, kann beispielsweise entweder ein Treibmittel beigemengt werden, in ihnen gelöst oder in anderer Weise gebunden werden. Durch eine geeignete Veränderung der chemischen oder physikalischen Außenbedingungen wird das Treibmittel als Treibgas freigesetzt und bläht die Partikel des Füllstoffes auf. Systeme, wie in DE 199 09 077 A1 und DE 100 39 390 A1 und in den darin genannten Druckschriften beschrieben, greifen dieses Prinzip auf und wenden es zur Erzeugung von Silikatschäumen und Kunststoffschäumen an.

Partikel der Füllstoffe in Form von Kugeln, Fasern oder Mikrofasern werden mit dem Bindemittel benetzt. Dieser Vorgang kann z. B. in einer Zusatzeinheit direkt vor dem Einbringen der Partikel in die Form oder das Werkzeug erfolgen. Alternativ oder zusätzlich können die Partikel in einem flüssigen Bindemittel, z. B. getränkt und damit umhüllt werden. Sollte die Oberflächenspannung zu groß sein, um die Partikel umhüllen zu können, kann zweckmäßigerweise eine Verarbeitung im Vakuum gewählt werden.

Füllstoffe in Form vorgeschäumter Partikel, wie Silikate, Bims, Ton, Perlithe, Mineralschäume, Schaumglas u. a., werden zweckmäßigerweise mit einem Bindemittel getränkt.

Verwendung kann das Formteil zweckmäßigerweise in allen Bereichen finden, in denen es um eine besonders stabile und feste sowie widerstandsfähige Form geht. Daher ist das Formteil vorzugsweise als Klimaanlagengehäuse mit oder ohne Speicherwirkung für Kälte und Wärme, als Luftkanal, Instrumententafel, Dekorteil, Verkleidungsteil im Fahrzeug, Dachhimmel, Seitenverkleidung, Sitzschale oder in HVAC/R-Anlagen (Heating/Heiz-, **V**entilation/Ventilations-, **A**ir Condition/Klima-, **C**ool/**R**efrigeration/Kühl-Anlagen), im Schiffbau als so genanntes Sandwich-Plate-System, im Sanitätsbereich als Verkleidung für Spülkästen, Trägerkörper eingesetzt.

Die mit der Erfindung erzielten Vorteile bestehen insbesondere darin, dass durch die Zugabe von porösen Partikeln eines Füllstoffes, die mit einem Bindemittel umgeben sind, zu einem als Basisstoff vorgesehenen Kunststoff Formteile mit hoher Dimensionsstabilität und Widerstandsfähigkeit bei einem vergleichsweise geringem Gewicht bereitgestellt werden können.

Gerade durch einen geeignet gewählten Volumen-Anteil der porösen Partikel des Füllstoffes ist eine Beibehaltung der günstigen Eigenschaften des als Basisstoff vorgesehenen Kunststoffes wie Bauteilsteifigkeit, Verzugsarmut und Wärmestandfestigkeit bei insgesamt verhältnismäßig geringer Dichte möglich. Die Verwendung von Füllstoff-Partikeln der genannten Form, Größe und Struktur mit einem umhüllenden Bindematerial ermöglicht zusammen mit einem thermoplastischen, duroplastischen oder elastomeren Kunststoff eine dem jeweiligen Bedarf der Industrie genau angepasste und damit besonders effektive Vereinbarung von Umweltschutzanliegen durch Materialund Energieeinsparung und einer Komfortverbesserung durch die Kompensation von Temperaturschwankungen. Dabei werden die Festigkeitseigenschaften des aus diesem Werkstoff hergestellten Formteils beibehalten oder sogar verbessert.

Damit wird ein insgesamt besonders umweltfreundliches und komfortables Formteil mit einem breiten Anwendungsfeld, insbesondere im Innenbereich eines Kraftfahrzeugs, zur Verfügung gestellt.

Ein Ausführungsbeispiel der Erfindung wird im Folgenden anhand einer Zeichnung näher erläutert.

Darin zeigen:
- Figur 1: eine ausschnittsweise schematische Darstellung eines spritzgegossenen Formteils mit Füllstoff-Partikeln,
- Figur 2: eine ausschnittsweise schematische Darstellung eines spritzgegossenen Formteils mit Füllstoff-Partikeln, wobei die Hohlräume der Partikel mit einem Phasenwechselmaterial gefüllt sind,
- Figur 3A bis 3C: eine ausschnittsweise schematische Darstellung einer Martrix-Struktur von miteinander verbundenen Füllstoff-Partikeln,
- Figur 4A bis 4C: eine schematische Darstellung verschiedenartiger Verfahrensabläufe zur Herstellung eines Formteils,
- Figuren 5A, 5B: eine schematische Darstellung eines spritzgegossenen Formteils mit Füllstoff-Partikeln und mit einer Deckschicht, und
- Figuren 6A, 6B: eine alternative Form für ein Formteil mit Deckschicht.

Gleiche Teile sind in allen Figuren mit denselben Bezugszeichen versehen.

Das spritzgegossene Formteil 1 weist als Basisstoff 2 einen thermoplastischen Kunststoff auf, der sich aufgrund seiner plastischen Eigenschaften in der Wärme besonders für Verarbeitungstechniken wie das Spritzgießen oder Extrudieren eignet. Diese Verarbeitungstechniken ermöglichen abhängig von der vorgegebenen Düsenform des jeweiligen Werkzeuges die Herstellung entsprechend beschaffener Formteile 1. Die besonders guten Formgebungseigenschaften erleichtern eine besonders hohe Passgenauigkeit im jeweiligen Verwendungsbereich, beispielsweise beim Verbau in einem Kraftfahrzeug, im Schiffbau oder im Sanitärbereich.

Das spritzgegossene Formteil 1 weist zusätzlich zum Basisstoff 2 darin eingebettete Partikel 4 eines Füllstoffes auf. Diese Partikel 4 bestimmen die spezifischen Eigenschaften des spritzgegossenes Formteiles 1 mit. Die Partikel 4 sind daher in besonderem Maße für eine Verwendbarkeit des spritzgegossenen Formteiles 1 auf den genannten Anwendungsgebieten ausgelegt. Dafür sind die Partikel 4 derart ausgebildet, dass das daraus gefertigte Formteil 1 den in den Anwendungsgebieten gestellten Anforderungen bezüglich des Gewichts Rechnung trägt. Diese bestehen nämlich darin, ein außerordentlich leichtes Formteil 1, beispielsweise für das Gehäuse von Klimaanlagen oder Luftzufuhranlagen oder Trägern oder Verkleidungen einsetzen zu können.

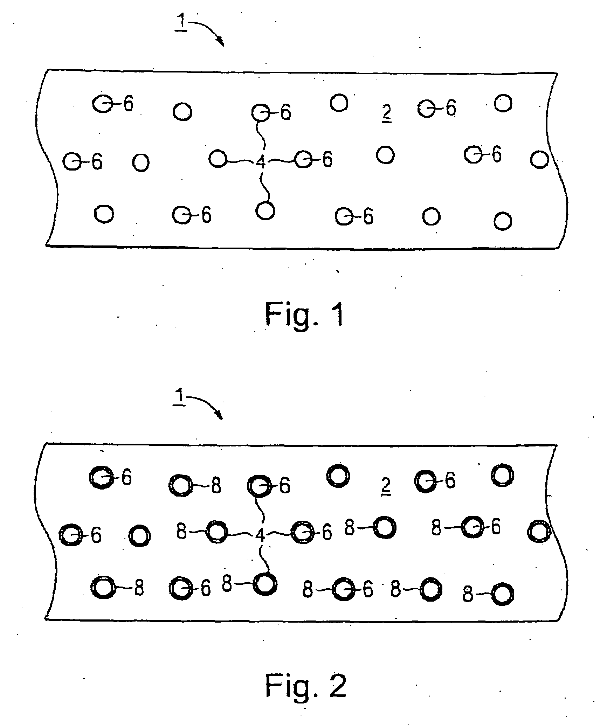

Zu diesem Zweck sind die im Basisstoff 2 des spritzgegossenen Formteils 1 eingebetteten Partikel 4 des Füllstoffes porös. Die Partikel 4 weisen also Hohlräume 6 auf, wie in Figur 1 gezeigt, die entweder von Natur aus gegeben sind oder die durch einen oben beschriebenen Aufschäumvorgang bei dazu geeigneten Partikeln 4 erzeugt sind.

Um ein Aufschwimmen der Partikel 4 im Basisstoff zu verhindern, ist der jeweilige Partikel 4 mit einem Bindemittel 8 umgeben.

Ein solches spritzgegossenes Formteil 1 mit Partikeln 4, die mit einem Bindemittel 8 in der Art einer Kapsel oder Pillierung umgeben sind, ist in Figur 2 gezeigt.

Gerade durch die Wahl eines Volumen-Anteils der porösen Partikel 4 des Füllstoffes von 40 % im Ausführungsbeispiel ist sowohl eine Beibehaltung der vorteilhaften Eigenschaften bezüglich Formsteifigkeit als auch eine besonders geringe Dichte und damit ein besonders geringes Gewicht des spritzgegossenen Formteiles 1, zum Beispiel eines Gehäuses von Klimaanlagen erreicht. Für den Einsatz beispielsweise für Gehäuse von Wärmetauschern, Kühlern, Luftzufuhranlagen, Wasserkästen und/oder für ein beliebiges anderes Formteil 1 im Innenbereich eines Kraftfahrzeuges, im Schiffbau oder im Sanitärbereich beträgt der Volumen-Anteil der porösen Partikel 4 bedarfsweise zwischen 10 % und 95 %. Dabei richtet sich die Schüttdichte nach der Korn- oder Partikelgrößenfraktion, z.B. bei einer Partikelgröße von 0,5 bis 1 mm beträgt die Schüttdichte 250 kg/m³, bei 1 bis 2 mm Partikelgröße 225 kg/m³, bei 2 bis 4 mm Partikelgröße 180 kg/m³ und bei 4 bis 8 mm 150 kg/m³.

Damit die porösen Partikeln 4 des Füllstoffes nicht durch den als Basisstoff 2 vorgesehenen Kunststoff ausgefüllt werden, werden geschlossenporige Partikel 4 des Füllstoffes eingesetzt, die diese Struktur von Natur aus aufweisen oder die diese durch entsprechende Behandlung, wie beispielsweise in der Druckschrift DE 199 09 077 A1 beschrieben, erhalten.

Um insbesondere beim thermischen Verarbeitungsprozess eine möglichst gute Verbindung der Partikel 4 miteinander und mit dem Basisstoff 2 zu bewirken, wird als Bindemittel 8 bevorzugt ein hitzeaktivierender Klebstoff, d. h. ein thermisch aushärtender Klebstoff, wie z. B. Harz, insbesondere ein Epoxidharz o. ä., verwendet. Weitere Beispiele für das Bindemittel 8 sind so genannte Zweikomponenten-Stoffe wie Polyurethan, Epoxid-Polysulfid-Harz oder Melanim-Harz (Flammschutz).

Die im Ausführungsbeispiel gezielte Verwendung von porösen Partikeln 4 mit einer Kugelform erleichtert eine Durchmischung der Partikel 4 des Füllstoffes mit dem als Basisstoff 2 vorgesehenen Kunststoff. Dies vermeidet gleichzeitig in besonderer Weise eine unerwünschte Aggregation, Clusterbildung und/oder Sedimentation der Partikel 4 des Füllstoffes in der so genannten Kunststoffmatrix. Denkbar als Partikelform sind allerdings auch eine regelmäßige Polyederform oder eine Faserform, die speziell zur Erhöhung von Festigkeitseigenschaften gewählt wird.

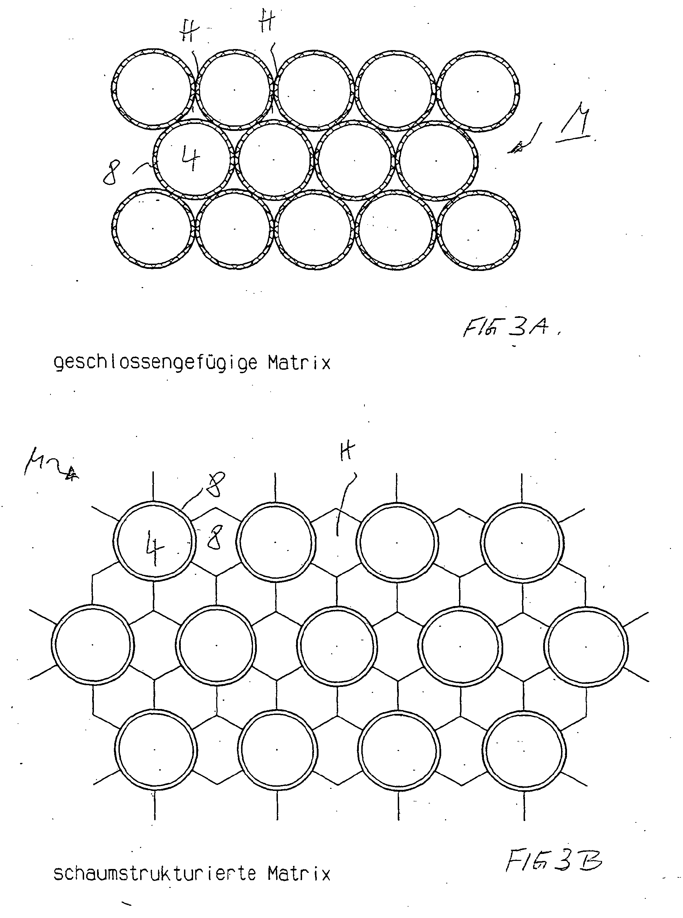

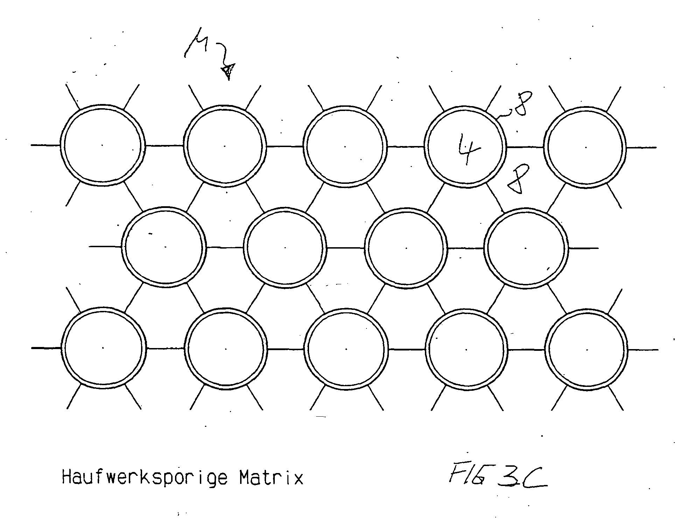

Je nach Vorgabe können aneinander stoßende mit dem Bindemittel 8 versehene Partikel 4 an einer Oberflächenschicht unter Bildung einer Matrix-Struktur M miteinander verbunden sein. Beispiele für verschiedenartige Matrixstrukturen M sind in den Figuren 3A bis 3C gezeigt. Figur 3A zeigt eine geschlossengefügige Matrix-Struktur M mit Hohlräumen H, Figur 3B eine schaumstrukturierte Matrix-Struktur M mit ausgefüllten Hohlräumen H durch Aufschäumen und Figur 3C eine haufwerksporige Matrix-Strukur M, welche alle drei jeweils durch eine stoffschlüssige und/oder formschlüssige Verbindung der Partikel 4 gekennzeichnet sind.

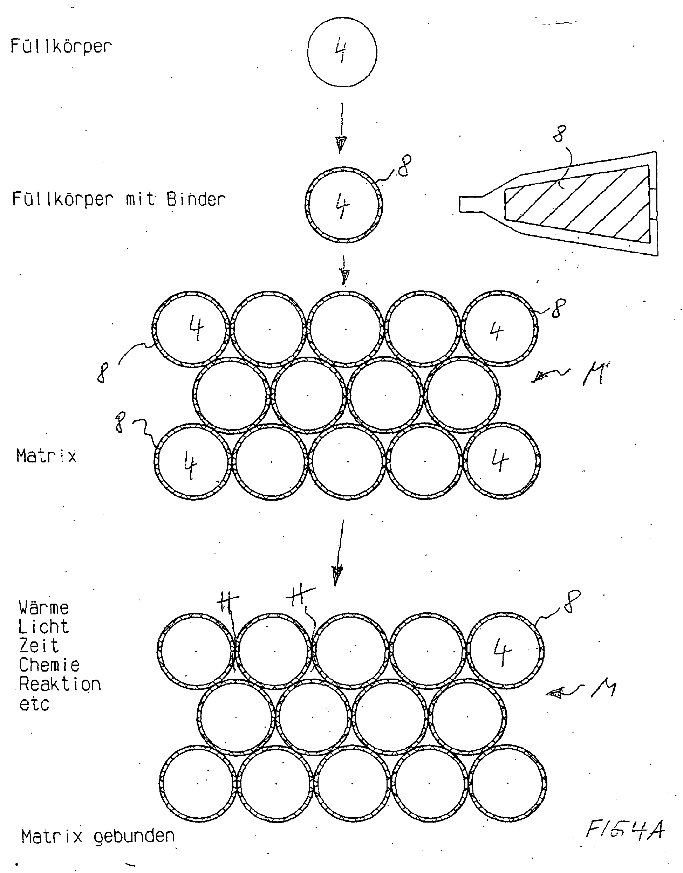

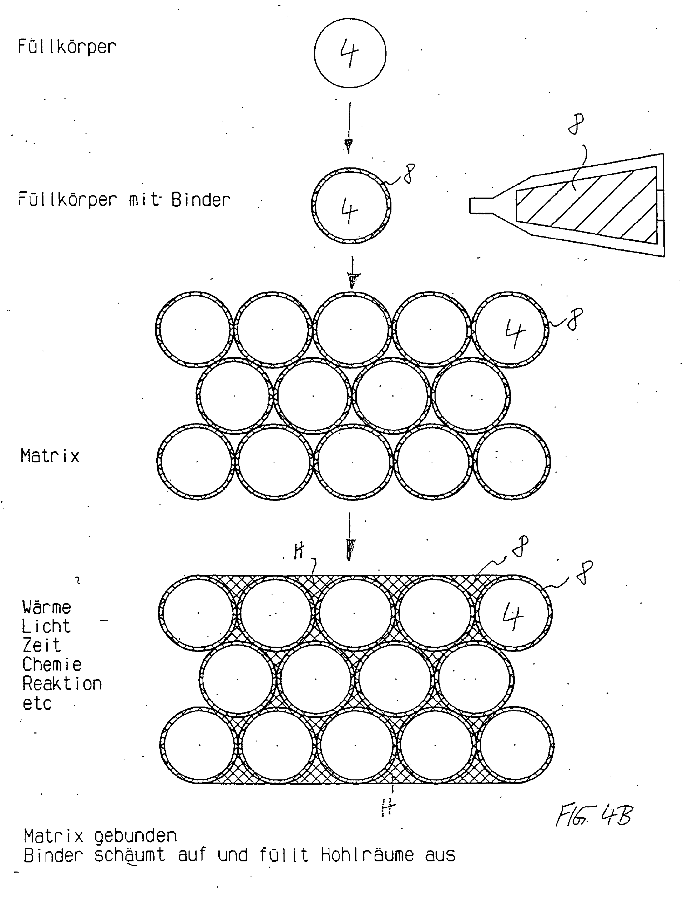

Zur Aufbringung des Bindemittels 8 auf die Partikel 4 werden diese mit dem Bindemittel 8 benetzt. In den Figuren 4A bis 4C sind beispielhaft verschiedene Verfahrensabläufe zur Herstellung des Formteils 1 dargestellt. Je nach Art des Bindemittels 8 kann dieses gemäß Figur 4A einfach durch Benetzung oder Aufsprühen auf die Partikel 4 aufgebracht werden, so dass diese umhüllt sind. Als Bindemittel 8 dient dabei ein thermisch aushärtender und/oder mikroverkapselter Klebstoff, z. B. ein Polymerations-Klebstoff, wie Polyester oder Acrylat. Alternativ kann das Bindemittel 8 durch Licht oder durch eine chemische Reaktion die Partikel 4 zu einer Matrix-Struktur M mit gefüllten Hohlräumen H binden, wie in der Figur 4B dargestellt. Dabei schäumt das Bindemittel 8 unter Wärme, Licht, Zeit, chemische Reaktion, etc. auf und füllt so die Hohlräume H zwischen aneinander stoßende Partikel 4 aus. Alternativ zum Ausfüllen der Hohlräume H können diese auch mit dem Bindemittel 8 ausgegossen werden und unter Wärme, Licht, Zeit, chemische Reaktion, etc. wie z.B. Polymerisation, Polyaddition ausreagieren.

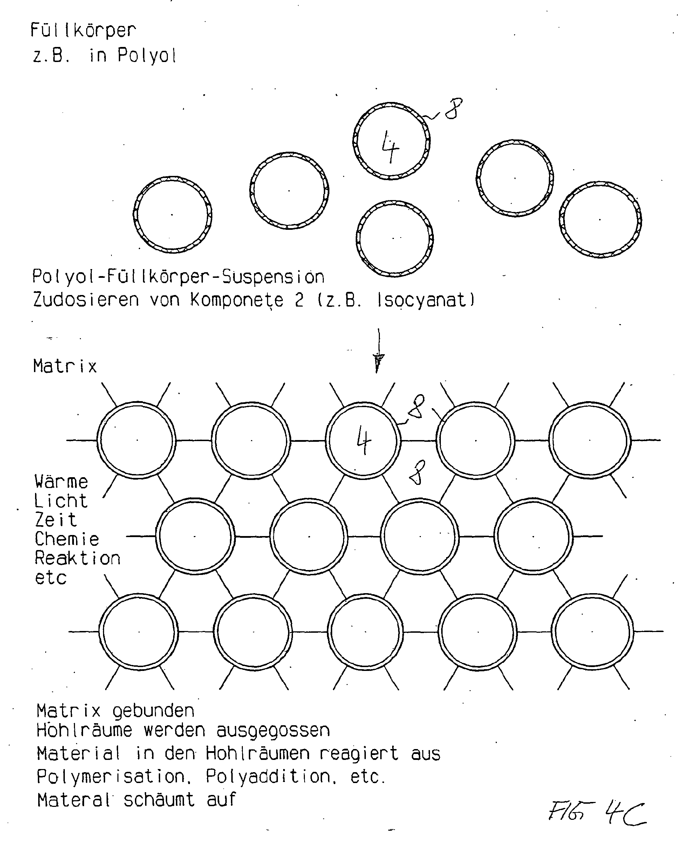

Bei der weiteren dargestellten Alternative in der Figur 4C wird als Bindemittel 8 ein Zweikomponenten-Stoff, z. B. Polyurethan oder ein Epoxidharz verwendet. Zum Aufbringen des Bindemittels 8 müssen dessen Komponenten, z.B. Isocyanat, vorab gemischt werden. Anschließend werden die Partikel 4 mit dem gemischten Bindemittel 8 benetzt und/oder alternativ in dieses getaucht.

Anschließend wird der mit den mit dem Bindemittel 8 umhüllten Partikeln 4 versehene Kunststoff als Spritzguss-Werkstoff durch die eingangs kurz beschriebene übliche Behandlung beim Spritzgießen in eine gewünschte Form gebracht und somit zu besonders passgenauen Formteilen 1 verarbeitet. Die zwischen aneinander stoßende Partikel 4 auftretende Hohlräume H werden mittels des Bindemittels 8 ausgegossen. Das Bindemittel 8 reagiert beispielsweise durch Polymeristion oder Polyaddition aus und schäumt dabei auf. Um die Partikel 4 des Füllstoffes bei der Plastifizierung im Spritzgieß-Werkzeug nicht zu zerstören, ist die durchschnittliche Größe der Partikel 4 an das Spritzgieß-Werkzeug angepasst und ist daher kleiner als 1 mm. Ferner ist die durchschnittliche Partikelgröße, z.B. zwischen 1 mm bis 15 mm zur dichten Ausgestaltung eines zu fertigenden Formteiles 1 an eine vorgegebene Minimalwandstärke des betreffenden Formteiles 1 insoweit angepasst, als das die durchschnittliche Partikelgröße vorzugsweise 1/3 oder 1/2 der Wandstärke beträgt.

In einem möglichen Ausführungsbeispiel beträgt die durchschnittliche Partikelgröße des Füllstoffes 0,9 mm bei einer Minimalwandstärke von 1,8 mm bei einem zum Beispiel ein Klimaanlagengehäuse bildendes Formteil 1. Die Minimalwandstärke anderer Formteile 1 eines Kraftfahrzeuges beträgt üblicherweise zwischen 1 mm und 2 mm, so dass eine besonders günstige durchschnittliche Partikelgröße des Füllstoffes in einer Größenordnung zwischen 0,2 mm und 0,9 mm liegt. Poröse Partikel 4 weisen einen Porendurchmesser von 0,0001 bis 0,1 mm auf.

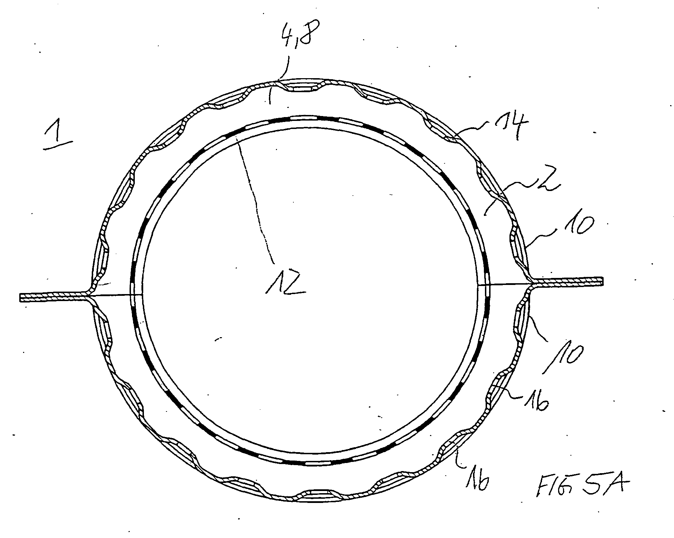

Figur 5A zeigt eine mögliche Ausführungsform für ein Formteil 1 aus zwei Halbschalen 10 und einem inneren Rundprofil 12 mit einem zusätzlich von einer Deckschicht 14 umgebenen Basisstoff 2. Die Deckschicht 14 dient dabei dem Schutz des Formteils 1 gegenüber mechanischen Belastungen. Bevorzugt ist die Deckschicht 14 partikelfrei. Für eine zusätzliche Anwendung als Dekorschicht 14 kann die Deckschicht 14 eingefärbt oder getönt sein.

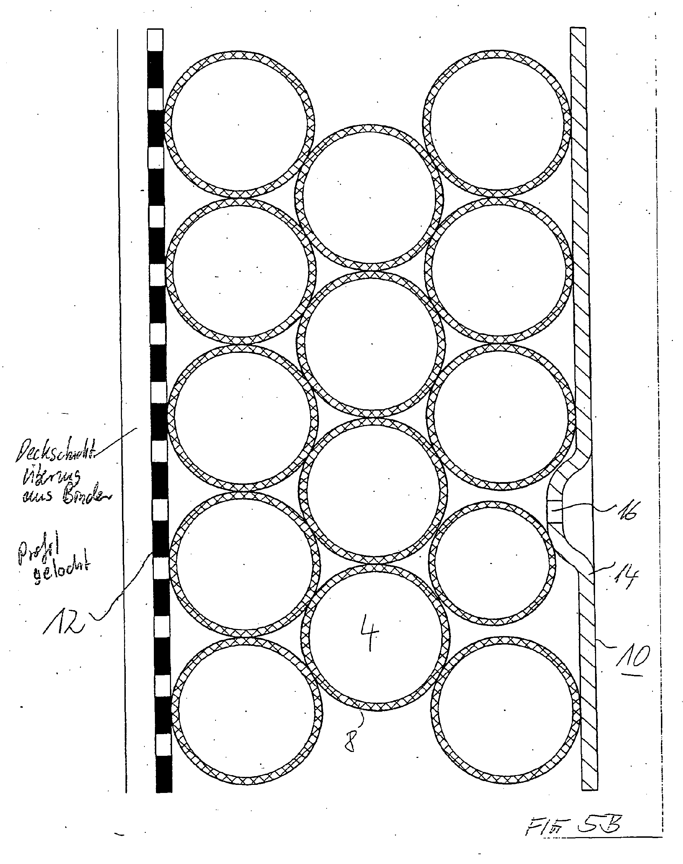

Zum Einbringen des Kunststoffs in eine die beiden Halbschalen 10 bildenden Form kann die Deckschicht 14 als Teil des formgebenden Werkzeugs, d. h. die Form selbst bildend, ausgebildet sein, wie dargestellt. Darüber hinaus kann die Deckschicht 14 mit Öffnungen 16 versehen sein, wodurch eine partikelfreie Deckschicht 14 gebildet ist. Figur 5B zeigt einen vergrößerten Ausschnitt des Formteils 1 gemäß Figur 5A im Bereich einer der Halbschalen 10 zwischen der Deckschicht 14 und dem inneren gelochten Rundprofil 12 und mit in einem Zwischenraum zwischen Deckschicht 14 und Rundprofil 12 angeordneten Partikeln 4. Die von dem Bindemittel 8 umgebenen Partikel 4 sind dabei zur Veranschaulichung der verschiedenen Möglichkeiten der Bindung der Partikel 4 in benachbarten Zwischenräumen mit verschiedenartiger Matrix-Struktur M dargestellt.

Die Darstellung der Komponenten des verhältnismäßig leichten und mit thermischen Energiespeichereigenschaften ausgerüsteten spritzgegossenen Formteiles 1 gilt selbstverständlich gleichermaßen für ein extrudiertes oder anderweitig geformtes Formteil 1 mit den entsprechenden Eigenschaften. Der Unterschied besteht nur in der Verarbeitung des Werkstoffs. Für den jeweiligen Formgebungsprozess, dem das Formteil 1 unterzogen wurde, sind daher die geeigneten Betriebsparameter gewählt. Wichtig für das Verhindern von Beulen beim Formgebungsprozess ist das flächige Anhaften der Schaum- oder Matrizstruktur M am tragenden Profil, z.B. am Rundprofil 12 oder an den Halbschalen 10. Im allgemeinen ist das tragende Profil das äußere Profil. Im Ausführungsbeispiel sind dies die Halbschalen 10. Das innere Profil, im Ausführungsbeispiel das Rundprofil 12 kann bei Bedarf entfallen. Seine Funktion kann auch von einem Werkzeugkern übernommen werden. Eine andere Möglichkeit liegt auch in der Verwendung von 3D-Textilien. Durch das Textil werden in diesem Fall die Körner oder Partikel vom inneren Hohlraum getrennt.

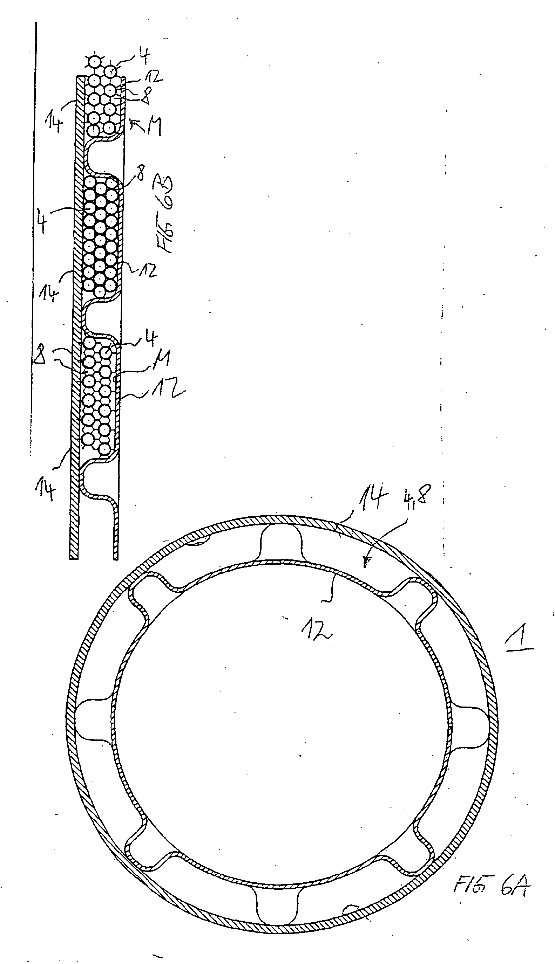

Figur 6A zeigt eine weitere mögliche Ausführungsform für ein Formteil 1, bei der ein inneres Rundprofil 12 mit zusätzlichen Abstandshaltern versehen ist, zwischen denen die Partikel 4 angeordnet sind. Fig. 6B zeigt einen Längsschnitt durch das Formteil 1 und nochmals die verschiedenartigen Matrixstrukturen M aus den Fig. 3A bis 3C.

## Patentansprüche

1. Werkstoff zum Spritzgießen oder Extrudieren von Formteilen (1), bei dem einem als Basisstoff (2) vorgesehenen Kunststoff poröse Partikel (4) eines Füllstoffes beigemischt sind, wobei der Partikel (4) zumindest teilweise mit einem Bindemittel (8) aus Klebstoff umgeben ist und eine Kugelform mit einer durchschnittlichen Partikelgröße kleiner 1 mm aufweist.

2. Werkstoff nach Anspruch 1, bei dem der Partikel (4) mit dem Bindemittel (8) verkapselt ist.

3. Werkstoff nach Anspruch 1 oder 2, bei dem als Bindemittel (8) ein Klebstoff, insbesondere ein thermisch aushärtender Klebstoff eingesetzt ist.

4. Werkstoff nach einem der vorhergehenden Ansprüche, bei dem als Bindemittel (8) ein mikroverkapselter Klebstoff eingesetzt ist.

5. Werkstoff nach einem der vorhergehenden Ansprüche, bei dem als Bindemittel (8) ein Zweikomponenten-Stoff eingesetzt ist.

6. Werkstoff nach einem der vorhergehenden Ansprüche, bei dem das Bindemittel (8) den Partikel (4) schichtweise umgibt.

7. Werkstoff nach einem der vorhergehenden Ansprüche, bei dem der Kunststoff mit den vom Bindemittel umgebenen Partikeln mit mindestens einer Deckschicht versehen ist.

8. Werkstoff nach Anspruch 7, bei dem die Deckschicht mit Öffnungen versehen ist.

9. Werkstoff nach Anspruch 7 oder 8, bei dem die Deckschicht partikelfrei ausgebildet ist.

10. Werkstoff nach einem der vorhergehenden Ansprüche, bei dem der Volumen-Anteil der Partikel (4) des Füllstoffes zwischen 10 % und 95 % beträgt.

11. Werkstoff nach einem der vorhergehenden Ansprüche, bei dem die Partikel (4) des Füllstoffes in ihrer durchschnittlichen Partikelgröße an eine vorgegebene Minimalwandstärke eines zu fertigenden Formteiles (1) angepasst sind.

12. Werkstoff nach einem der vorhergehenden Ansprüche, bei dem als Kunststoff ein Thermoplast, ein Duroplast oder ein Elastomer eingesetzt ist.

13. Werkstoff nach einem der vorhergehenden Ansprüche, bei dem als Partikel (4) des Füllstoffes Glasschaumgranulat-Partikel, Glaskugeln oder Aktivkohle-Partikel, Glasmehl, Gesteinsmehl, Kalk, Ton, Talkum, Alkalisilikat, Ammoniumsilikat und/oder ein anderer Mineralstoff oder ein anderes Silikat eingesetzt ist.

14. Werkstoff nach einem der vorhergehenden Ansprüche, bei dem als Partikel (4) des Füllstoffes ein Liaver-Schaumpartikel eingesetzt ist.

15. Werkstoff nach einem der vorhergehenden Ansprüche, bei dem aneinander stoßende Partikel über eine Oberflächenschicht miteinander verbunden sind unter Bildung einer Matrixstruktur.

16. Werkstoff nach Anspruch 15, bei dem die Partikel stoff- und/oder formschlüssig miteinander verbunden sind.

17. Formteil (1) aus einem Werkstoff nach einem der vorhergehenden Ansprüche, bei dem in einem als Basisstoff (2) vorgesehenen Kunststoff poröse Partikel (4) eingebettet sind, die mit einem Bindemittel (8) aus Klebstoff umgeben sind und eine Kugelform mit einer durchschnittlichen Partikelgröße kleiner 1 mm aufweisen.

18. Verfahren zur Herstellung eines Formteils (1) nach Anspruch 19, bei dem poröse Partikel (4) eines Füllstoffes mit einem Bindemittel (8) aus Klebstoff umgeben werden, insbesondere benetzt werden und in einen Kunststoff eingebracht werden, wobei das daraus entstehende Gemisch als Werkstoff unter Temperatureinwirkung spritzgegossen oder extrudiert wird.

19. Verwendung eines Formteils (1) nach Anspruch 17 als Klimaanlagengehäuse, als Luftkanal, Instrumententafel, Dekorteil, Verkleidungsteil, Querträger, Karosseriestruktur, Frontend-Bereich, Dachhimmel, Seitenverkleidung oder Sitzschale im Fahrzeug oder in Heiz-, Ventilations-, Klima- und Kühl-Anlagen oder als Verkleidungsteil, Tragstruktur, Behälterwand oder Paneele im Sanitärbereich oder für Fahrzeugaufbauten oder im Schiffbau.

## Claims

1. Material for the injection moulding or extrusion of moldings (1) in which porous particles (4) of a filler are added to a plastic provided as the base material (2), the particle (4) being at least partially coated in a binder (8) of an adhesive substance and having a spherical shape with an average particle size of less than 1 mm.

2. Material in accordance with claim 1,
in which the particle (4) is encapsulated by the binder (8).

3. Material in accordance with claim 1 or 2,
in which an adhesive substance, in particular a thermally hardening adhesive, is used as the binder (8).

4. Material in accordance with one of the preceding claims,
in which a micro-encapsulated adhesive is used as the binder (8).

5. Material in accordance with one of the preceding claims,
in which a two-component substance is used as the binder (8).

6. Material in accordance with one of the preceding claims,
in which the binder (8) coats the particle (4) in layers.

7. Material in accordance with one of the preceding claims,
in which the plastic with the particles coated in the binder is provided with at least one covering layer.

8. Material in accordance with claim 7,
in which the covering layer is provided with openings.

9. Material in accordance with claim 7 or 8,
in which the covering layer is particle-free.

10. Material in accordance with one of the preceding claims,
in which the percentage by volume of the particles (4) of the filler is between 10% and 95%.

11. Material in accordance with one of the preceding claims,
in which the average particle size of the particles (4) of the filler are adapted to a predetermined minimal wall thickness of a molding (1) to be manufactured.

12. Material in accordance with one of the preceding claims,
in which a thermoplastic, a duroplastic or an elastomer is used as the plastic.

13. Material in accordance with one of the preceding claims,
in which glass foam granulate particles, glass beads or activated carbon particles, glass powder, rock powder, lime, clay, talc, alkali silicate, ammonium silicate and/or another mineral material or another silicate are used as the particles (4) in the filler.

14. Material in accordance with one of the preceding claims,
in which a Liaver® foam particle is used as the particle (4) in the filler.

15. Material in accordance with one of the preceding claims,
in which immediately adjacent particles are joined together by a surface layer to form a matrix structure.

16. Material in accordance with claim 15,
in which the particles are joined together in a positive and/or bonded connection.

17. Molding (1) made of a material in accordance with one of the preceding claims,
in which porous particles (4) coated in a binder (8) of an adhesive substance and having a spherical shape with an average particle size of less than 1 mm are embedded in a plastic provided as the base material (2).

18. Process for the manufacture of a molding (1) in accordance with claim 17,
in which porous particles (4) of a filler are coated in, and in particular wetted by, a binder (8) of an adhesive substance and placed in a plastic, the resulting mixture being injection moulded or extruded as a material under the influence of temperature.

19. Use of a molding (1) in accordance with claim 17 as an air conditioning system housing, air duct, instrument panel, garnish molding, trim molding, cross member, body structure, front end area, roof liner, lateral trim or seat shell in the vehicle or in heating, ventilation, air conditioning and cooling systems or as trim, supporting structure, tank wall or panelling in sanitary engineering, for vehicle superstructures or in ship building.

## Revendications

1. Matériau pour le moulage par injection ou pour l'extrusion de pièces moulées (1), matériau dans lequel des particules poreuses (4) d'une matière de remplissage sont mélangées à une matière plastique prévue comme matière de base (2), où la particule (4) est entourée au moins partiellement par un liant (8) constitué d'un adhésif et présente une forme sphérique ayant une taille de particule moyenne inférieure à 1 mm.

2. Matériau selon la revendication 1 dans lequel la particule (4) est enrobée par le liant (8).

3. Matériau selon la revendication 1 ou 2, dans lequel on utilise, comme liant (8), un adhésif, en particulier un adhésif durcissant thermiquement.

4. Matériau selon l'une quelconque des revendications précédentes, dans lequel on utilise, comme liant (8), un adhésif micro-enrobé.

5. Matériau selon l'une quelconque des revendications précédentes, dans lequel on utilise, comme liant (8), un matériau à deux composants.

6. Matériau selon l'une quelconque des revendications précédentes, dans lequel le liant (8) entoure la particule (4), par couches.

7. Matériau selon l'une quelconque des revendications précédentes, dans lequel la matière plastique comprenant les particules entourées par le liant est dotée d'au moins une couche de recouvrement.

8. Matériau selon la revendication 7, dans lequel la couche de recouvrement est dotée d'ouvertures.

9. Matériau selon la revendication 7 ou 8, dans lequel la couche de recouvrement est configurée en étant exempte de particules.

10. Matériau selon l'une quelconque des revendications précédentes, dans lequel la part de volume des particules (4) de la matière de remplissage est comprise entre 10 % et 95 %.

11. Matériau selon l'une quelconque des revendications précédentes, dans lequel les particules (4) de la matière de remplissage, dans leur taille de particule moyenne, sont adaptées à une épaisseur de paroi minimale prédéfinie d'une pièce moulée (1) à fabriquer.

12. Matériau selon l'une quelconque des revendications précédentes, dans lequel on utilise, comme matière plastique, une matière thermoplastique, une résine thermodurcissable ou bien un élastomère.

13. Matériau selon l'une quelconque des revendications précédentes, dans lequel on utilise, comme particules (4) de la matière de remplissage, des particules de granulats de mousse de verre, des billes de verre ou bien des particules de charbon actif, de la poudre de verre, de la roche pulvérisée, de la chaux, de l'argile, de la poudre de talc, du silicate alcalin, du silicate d'ammonium et / ou une autre matière minérale ou bien un autre silicate.

14. Matériau selon l'une quelconque des revendications précédentes, dans lequel on utilise, comme particule (4) de la matière de remplissage, une particule de mousse de Liaver.

15. Matériau selon l'une quelconque des revendications précédentes, dans lequel des particules au contact les unes des autres sont reliées entre elles par une couche superficielle, en formant une structure matricielle.

16. Matériau selon la revendication 15, dans lequel les particules sont reliées entre elles par continuité de matière et / ou de forme.

17. Pièce moulée (1) dans un matériau selon l'une quelconque des revendications précédentes, dans lequel des particules poreuses (4) sont noyées dans une matière plastique prévue comme matière de base (2), particules qui sont entourées par un liant (8) constitué d'un adhésif et présentent une forme sphérique ayant une taille de particule moyenne inférieure à 1 mm.

18. Procédé de fabrication d'une pièce moulée (1) selon la revendication 17, dans lequel des particules poreuses (4) d'une matière de remplissage sont entourées par un liant (8) constitué d'un adhésif, en particulier humidifiées et insérées dans une matière plastique, où le mélange en résultant est moulé par injection ou bien extrudé, comme matériau, sous l'effet de la température.

19. Utilisation d'une pièce moulée (1) selon la revendication 17, comme carter d'un système de climatisation, comme conduit d'air, tableau de bord, élément décoratif, élément de garniture, traverse, structure de carrosserie, zone avant, garniture intérieure de pavillon, garniture latérale ou coque de siège dans le véhicule ou bien dans des systèmes de chauffage, de ventilation, de climatisation et de refroidissement, ou bien comme élément de garniture, structure porteuse, paroi de récipient ou panneaux dans le domaine sanitaire, ou bien pour des carrosseries de véhicules ou bien dans la construction navale.
